# FASCICULE DE BREVET EUROPEEN

(11) **EP 3 237 544 B1**
(45) Date de publication et mention de la délivrance du brevet: **12.02.2020**
(21) Numéro de dépôt: 15820513.8
(22) Date de dépôt: 21.12.2015
(51) Int. Cl.: C08L 77/02, C08L 77/06, B29C 70/52, C08J 5/04

(54) **COMPOSITION THERMOPLASTIQUE A HAUTE FLUIDITE**
THERMOPLASTISCHE ZUSAMMENSETZUNG MIT HOHER FLIESSFÄHIGKEIT
THERMOPLASTIC COMPOSITION HAVING HIGH FLUIDITY

(30) Priorité: 22.12.2014 FR 1463108
(43) Date de publication de la demande: 01.11.2017
(73) Titulaire: Rhodia Operations, 75009 Paris (FR)
(72) Inventeur: ORANGE, Gilles, 69390 Vourles (FR); TUPINIER, Didier, 38150 Assieu (FR)
(74) Mandataire: Nony
(86) Numéro de dépôt international: PCT/EP2015/080818
(87) Numéro de publication internationale: WO 2016/102481

(56) Documents cités:
- WO-A1-2011/003786
- WO-A1-2013/190224
- WO-A1-2014/121842

## Description

La présente invention concerne le domaine des matériaux composites, élaborés *via* l'imprégnation d'une étoffe (matériau de renfort) avec au moins un polymère thermoplastique à l'état fondu en particulier un polyamide, et leur procédé de fabrication.

Les matériaux composites à matrice thermoplastique constituent aujourd'hui des matériaux hautes performances pour les industries des marchés de masse comme les transports terrestres (automobile...), l'énergie, les sports et loisirs, les engins agricoles ou de travaux publics, ou des marchés plus limités mais en développement comme l'aéronautique. Ils possèdent en effet de bonnes performances mécaniques intrinsèques, notamment une ductilité, une tenue aux chocs, une bonne stabilité chimique, notamment aux solvants, et une recyclabilité totale.

Parmi les procédés de fabrication de structures composites, on citera des procédés utilisant des semi-produits (pre-preg, plaques, tapes) comme l'estampage et surmoulage, l'enroulement filamentaire ou positionnement de fibres ou bandes (tapes), et des procédés directs comme la consolidation en moule sous faible pression LCM (Liquid Composite Molding), ou continus comme la pultrusion-injection.

Malheureusement, dans le cas des composites à base thermoplastique, une contrainte limitative au niveau du procédé est le taux d'imprégnation du renfort fibreux par le polymère à l'état fondu.

Diverses solutions ont été développées ces dernières années, notamment soit par l'utilisation d'oligomères et/ou monomères avec polymérisation in-situ après imprégnation du renfort, soit par l'utilisation de polymères à haute fluidité.

Ainsi, le développement de nouveaux polymères thermoplastiques à faible viscosité en fondu a permis d'accéder à une meilleure imprégnation des renforts fibreux (augmentation du taux de fibres, réduction des temps de cycle procédé).

Néanmoins, le niveau encore élevé de viscosité de ces polymères impose des limites.

Il a été observé de manière inattendue que l'utilisation conjointe de deux composés spécifiques permet de réduire de façon très significative la viscosité en fondu de polymères thermoplastiques notamment de type polyamide.

Ainsi, il est décrit une composition thermoplastique à haute fluidité à l'état fondu, comprenant au moins :
(a) une matrice polymérique thermoplastique ;
(b) un oligomère choisi parmi les oligomères d'ester cyclique(s), les oligomères d'éther et leurs mélanges ; et
(c) un polymère phénolique ;
lesdits composés (b) et (c) étant présents dans un rapport pondéral (c)/(b) variant de 0,25 à 6 de préférence d'environ 0,75 à 2,75.Ainsi, selon un de ces aspects, la présente invention concerne une composition thermoplastique à haute fluidité à l'état fondu, comprenant au moins :
(a) de 80 à 99,8 % en poids de matrice polymérique thermoplastique, en particulier de polyamide(s) ;
(b) de 0,1 à 10 % en poids d'oligomère(s) de polyester cyclique(s), en particulier de poly(butylène téréphtalate) cyclisé, ledit oligomère possédant un degré de polymérisation compris de 2 à 25 ; et
(c) de 0,1 à 12 % en poids de polymère(s) phénolique(s), et en particulier de résine(s) Novolac ;
lesdits composés (b) et (c) étant présents dans un rapport pondéral (c)/(b) variant de 0,25 à 6 de préférence d'environ 0,75 à 2,75.

Dans le présent texte, le terme « *matrice polymérique thermoplastique* » est utilisé pour désigner un unique polymère thermoplastique ou un mélange de polymères thermoplastiques.

Au sens de l'invention, par « *matrice polymérique thermoplastique »,* on entend un polymère thermoplastique, ou un mélange de polymères thermoplastiques.

Au sens de l'invention, par « *polymère thermoplastique* », on entend tout polymère doté d'une température de fusion inférieure ou égale à 325 °C.

Certes l'addition d'un antiplastifiant de type polymère phénolique à un polyamide a déjà été décrite par exemple dans les demandes WO2011/048055 A1, WO2009/037276 A1 et WO2011/003786 A1, notamment à des fins d'accroissement de la fluidité du polyamide à l'état fondu.

L'ajout d'un plastifiant de type oligomère choisi parmi les oligomères d'ester cyclique(s), les oligomères d'éther à des polyamides est également divulgué, notamment dans la demande WO2013/190224 A1. Toutefois, ces oligomères engendrent une réduction limitée de la viscosité en fondu du polyamide et peuvent provoquer une altération de ses propriétés comme par exemple une modification de sa température de transition vitreuse Tg ou encore de la cohésion interfaciale fibre-matrice lors de la fabrication d'un matériau composite à partir d'un polyamère ainsi additivé.

A la connaissance des inventeurs, la combinaison de ces deux composés avec une matrice thermoplastique n'est pas connue à ce jour.

De manière inattendue, les inventeurs ont ainsi découvert que l'utilisation conjointe d'un oligomère choisi parmi les oligomères d'ester cyclique(s), les oligomères d'éther et leurs mélanges ; et d'un additif de type polymère phénolique permet de réduire de façon très significative la viscosité en fondu de la matrice thermoplastique.

Les inventeurs ont en outre constaté que l'association de ces deux additifs permettait d'augmenter de manière synergique la fluidité à l'état fondu de la matrice thermoplastique, et notamment lorsqu'ils sont introduit en faible quantité (de 1 à 10 %) sans les inconvénients précités.

Comme il ressort notamment des exemples ci-après, la composition de l'invention s'avère avantageuse à plusieurs titres.

Tout d'abord, l'utilisation d'une composition thermoplastique à haute fluidité permet une meilleure imprégnation du matériau de renfort, et donc l'obtention plus rapide d'articles composites dotés en outre d'une faible porosité. L'utilisation d'une telle composition permet également de réaliser des articles avec une haute teneur en fibres.

En outre, la faible viscosité de la composition de l'invention, en particulier lorsqu'elle est inférieure à 25 Pa.s rend possible la fabrication d'articles composites selon un procédé direct de type LCM ou pultrusion, notamment pultrusion-injection, c'est-à-dire à une vitesse compatible avec les besoins de l'industrie.

Selon un autre de ses aspects, la présente invention vise un procédé de fabrication d'un article composite comprenant au moins une étape d'imprégnation d'une étoffe de renfort ou d'une préforme avec une composition selon l'invention à l'état fondu.

Selon cet aspect, le procédé peut être un procédé de pultrusion de préférence par injection directe, ou de RTM par injection en moule fermé.

Selon encore un autre de ses aspects, l'invention concerne un article composite obtenu par le procédé tel que défini ci-dessus.

Il est également décrit l'utilisation d'un oligomère (b) choisi parmi les oligomères d'ester cyclique(s) ou les oligomères d'éther et leurs mélanges en association avec au moins un polymère phénolique (c), à titre d'additif fluidifiant dans une matrice polymérique thermoplastique.

Ainsi, l'invention a encore pour objet l'utilisation d'un oligomère (b) choisi parmi les oligomères de polyester cyclique(s) en association avec au moins un polymère phénolique (c), ledit oligomère possédant un degré de polymérisation compris de 2 à 25, à titre d'additif fluidifiant dans une matrice polymérique thermoplastique.

Selon une variante de réalisation, lesdits composés (b) et (c) utilisés à titre d'additif fluidifiant dans une matrice polymérique thermoplastique sont mis en présence dans un rapport pondéral (c)/(b) variant de 0,25 à 6 de préférence d'environ 0,75 à 2,75.

Avantageusement, la quantité en composés (b) et (c) est ajustée pour diminuer la viscosité à l'état fondu de ladite matrice à une valeur inférieure à 75 Pa.s et de préférence inférieure à 50 Pa.s voire inférieure ou égale à 20 Pa.s.

Dans le cadre de la présente invention, toutes les viscosités exprimées à l'état fondu sont mesurées à l'aide d'un rhéomètre cône-plan de diamètre 25 mm sous azote, sous un balayage en cisaillement par palier allant de 10⁻¹ à 10² s⁻¹ à 100 % de déformation en mode dynamique avec un balayage continu en fréquence en conditions isothermes. Sauf dans le cas mentionné ci-dessous, cette mesure est effectuée à une température allant de 20 °C à 30 °C au-dessus du point de fusion (Tf) du matériau considéré si semi-cristallin, et à une température T allant de 80°C à 200°C, voire de 100 °C à 200 °C, au-dessus de sa température de transition vitreuse (Tg) si amorphe (avec T < 325 °C), pour une fréquence de 10 Hz.

Pour ce faire, le matériau considéré est introduit à l'état sec (RH = 0, RH pour *relative humidity*) sous forme de granulés ou de poudre broyée entre les plateaux du rhéomètre, puis fondu, de telle sorte à former un film liquide de 50 µm d'épaisseur sur lequel est alors réalisé la mesure.

Dans le cas particulier où la mesure de viscosité concerne une composition comprenant une matrice polymérique thermoplastique, et notamment, une composition selon l'invention, elle est effectuée à une température allant de 20 °C à 30 °C au-dessus du point de fusion (Tf) de la matrice polymérique (a) si semi-cristalline, et à une température allant de 80 °C à 200 °C au-dessus de sa température de transition vitreuse (Tg) si amorphe.

Lorsque la mesure de viscosité concerne une composition selon l'invention, elle est réalisée sur un mélange homogène de cette composition.

Au sens de l'invention, le terme homogène qualifie une composition ou mélange dans lequel les composés (a) (b) et (c) selon l'invention sont uniformément répartis. Il est ainsi garanti la même valeur de viscosité à l'état fondu en tout point du mélange.

### MATRICE POLYMERIQUE THERMOPLASTIQUE

Comme indiqué préalablement, une composition selon l'invention comprend au moins une matrice polymérique thermoplastique.

Les polymères thermoplastiques convenant à la présente invention peuvent être choisis parmi :
- les polyéthylènimines (PEI) ;
- les polyimides (PI) ;
- les polyuréthanes thermoplastiques (TPU) ;
- les polyesters ; les polytéréphtalates d'éthylène (PET) ou de butylène (PBT) ;
- les polyphénylènes sulfide (PPS) ;
- les polyaryléther cétones (PAEK PolyArylEtherKetone) telle que la polyétheréther cétone (PEEK) et la polyéthercétone cétone (PEKK) ;
- les polyamides aliphatiques (PA), et semi-aromatiques (PPA), certains de ces polymères étant commercialisés par la société SOLVAY sous la dénomination Technyl et Amodel ;
- les polymères fluorés comprenant au moins un monomère de formule (I) suivante : CFX=CHX' (I), où X et X' désignent indépendamment un atome d'hydrogène ou d'halogène (en particulier de fluor ou de chlore) ou un radical alkyle perhalogéné (en particulier perfluoré), et de préférence X=F et X'=H, tels que le poly(fluorure de vinylidène) (PVDF), de préférence sous forme a, les copolymères de fluorure de vinylidène avec par exemple l'hexafluoropropylène (HFP), les copolymères fluoroéthylène / propylène (FEP), les copolymères d'éthylène avec soit le fluoroéthylène/propylène (FEP), soit le tétrafluoroéthylène (TFE), soit le perfluorométhylvinyl éther (PMVE), soit le chlorotrifluoroéthylène (CTFE), certains de ces polymères étant notamment commercialisés par la société SOLVAY sous la dénomination Solef ; et
- leurs mélanges.

De préférence, la matrice thermoplastique de l'invention possède une viscosité à l'état fondu allant de 1 à 200 Pa.s, en particulier de 1 à 75 Pa.s, plus préférentiellement de 5 à 50 Pa.s.

Selon un mode de réalisation de l'invention, la matrice polymérique thermoplastique comprend au moins un polyamide, de préférence, elle est constituée de polyamide(s).

Les polyamides convenant à l'invention peuvent notamment être aliphatiques ou semi-aromatiques, semi-cristallins ou amorphes.

La polymérisation du polyamide de l'invention est notamment réalisée selon les conditions opératoires classiques de polymérisation des polyamides, de manière continue ou discontinue.

Plus particulièrement, conviennent à l'invention, des polyamides ayant une masse moléculaire moyenne en nombre supérieure à 5 000 g/mol, plus préférentiellement comprise entre 8 000 g/mol et 20 000 g/mol, ou bien un mélange de polyamides de masses moléculaires différentes, ayant des propriétés mécaniques suffisantes et une certaine tenue lors des différents procédés de mises en forme.

La masse moléculaire moyenne en poids Mw des polyamides pouvant convenir à l'invention peut être comprise entre 10 000 et 50 000 g/mol, préférentiellement comprise entre 12 000 et 30 000 g/mol.

Il est à noter que les masses moléculaires figurant à l'égard de ces polymères sont pour l'essentiel présentées à titre indicatif d'une échelle de poids. Il est à noter qu'une masse moléculaire spécifique peut être déterminée selon de nombreuses manières qui sont bien connues en soi de l'homme de l'art.

A titre illustratif de ces méthodes peuvent être citées notamment celle se fondant sur une analyse des groupes terminaux et en particulier, celle faisant appel à une mesure de chromatographie sur gel perméable (Gel Permeation Chromatographie GPC) appelée également chromatographie d'exclusion stérique (SEC). D'une manière générale, les mesures GPC d'un polyamide peuvent être réalisées dans le dichlorométhane (solvant et éluent), après modification chimique du polyamide afin de le solubiliser. Un détecteur UV est utilisé car le polyamide modifié chimiquement possède un chromophore UV. Le calcul de la distribution de masses ainsi que des masses moyennes Mn, et Mw peut être effectué en équivalents polystyrène (PST) ou masse absolue, après calibration par des étalons commerciaux. Si nécessaire, des mesures en masses absolues peuvent être réalisées, par détection viscosimétrique. Dans le cadre de la présente invention, les masses moléculaires moyennes Mn et Mw sont exprimées en masse absolue. Les Mn et Mw peuvent être calculées à partir de la totalité de la distribution ou après troncature des faibles masses si on ne souhaite pas prendre en compte la contribution des oligomères cycliques.

Les polyamides peuvent être notamment choisis dans le groupe comprenant les polyamides obtenus par polycondensation d'au moins un diacide carboxylique aliphatique avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leurs mélanges et (co)polyamides.

Plus précisément, ces copolyamides peuvent être, par exemple, le polyadipamide d'hexaméthylène, les polyphtalamides obtenus à partir d'acide téréphtalique et/ou isophtalique, les copolyamides obtenus à partir d'acide adipique, d'hexaméthylène diamine et de caprolactame.

Le polyamide de l'invention peut en particulier être choisi dans le groupe comprenant les polyamides obtenus par polycondensation d'au moins un diacide carboxylique aliphatique avec une diamine aliphatique ou cyclique comme le PA 66, PA 6.10, PA 6.12, PA 12.12, PA 4.6, MXD 6 ou entre au moins un diacide carboxylique aromatique et une diamine aliphatique ou aromatique comme les polytéréphtalamides, polyisophtalamides, polyaramides, ou leur mélange et (co)polyamides. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 10T, PA 11, PA 12, ou leur mélange et (co)polyamides.

A titre de polyamides convenants à la présente invention peuvent notamment être cité PA 6, PA 7, PA 10, PA 11, PA 12, PA 46, PA 66, PA 69, PA 610, PA 612, PA 9T, PA 10T, PA 4.6, PA 6.10, PA 6.12, PA 12.12, PA 6.66, MXD 6, PA 6TXT, PA 66/6T, PA 66/6I, PA6T/6I, PA 6T/6I/66.

On peut en particulier citer le PA 66 22FE1 commercialisé par SOLVAY sous le nom STABAMID.

La composition de l'invention peut également comprendre les copolyamides dérivés notamment des polyamides ci-dessus, ou les mélanges de ces polyamides ou copolyamides.

De préférence, les polyamides sont choisis parmi les PA 66, PA 6.10, PA 6.12, PA 12.12, PA 4.6, MXD 6, PA 6, PA 7, PA 9T, PA 10T, PA 11, PA 12, PA 6T/6I, PA 6T/6I/66, les copolyamides en dérivant, et leurs mélanges.

Le polyamide peut notamment être un polymère comprenant des chaînes macromoléculaires étoiles ou H, branché, ramifié, hyper-ramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0682057 et EP0832149.

Les polyamides à structure étoile sont connus pour présenter une fluidité améliorée par rapport à des polyamides linéaires. Les chaînes macromoléculaires étoiles comportent un cœur et au moins trois branches de polyamide. Les branches sont liées au cœur par une liaison covalente, par l'intermédiaire d'un groupement amide ou d'un groupement d'une autre nature. Le cœur est un composé chimique organique ou organométallique, de préférence un composé hydrocarboné comportant éventuellement des hétéroatomes et auquel sont reliées les branches. Les branches sont des chaînes polyamides. Les chaînes polyamides constituant les branches sont de préférence du type de celles obtenues par polymérisation des lactames ou aminoacides, par exemple de type polyamide 6. Le polyamide à structure étoile selon l'invention comprend éventuellement, outre les chaînes étoiles, des chaînes polyamide linéaires. Dans ce cas, le rapport en poids entre la quantité de chaînes étoiles et la somme des quantités de chaînes étoiles et de chaînes linéaires est compris entre 0,5 et 1 bornes incluses. Il est de préférence compris entre 0,6 et 0,9.

Selon un mode de réalisation préférentiel de l'invention, le polyamide à structure étoile, c'est-à-dire comprenant des chaînes macromoléculaires étoiles, est obtenu par copolymérisation d'un mélange de monomères comprenant au moins :
a) des monomères de formule générale I) suivante : 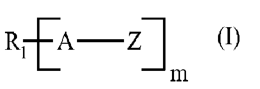
b) des monomères de formules générales (Ma) et (Mb) suivantes :

   x-R₂-Y (IIa)

   ou 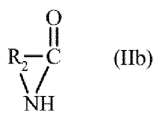
c) éventuellement des monomères de formule générale (III) ou (IV) suivante :

   Z-R₃-Z (III)

   ou

   R4-Z (IV)

   dans lesquelles :
   - R₁ est un radical hydrocarboné comprenant au moins 2 atomes de carbone, linéaire ou cyclique, aromatique ou aliphatique et pouvant comprendre des hétéroatomes ;
   - A est une liaison covalente ou un radical hydrocarboné aliphatique pouvant comprendre des hétéroatomes et comprenant de 1 à 20 atomes de carbone ;
   - Z représente une fonction aminé primaire ou une fonction acide carboxylique ;
   - Y est une fonction aminée primaire quand X représente une fonction acide carboxylique, ou Y est une fonction acide carboxylique quand X représente une fonction aminée primaire ;
   - R₂, R₃, R₄ identiques ou différents représentent des radicaux hydrocarbonés aliphatiques, cycloaliphatiques ou aromatiques substitués ou non comprenant de 2 à 20 atomes de carbone et pouvant comprendre des hétéroatomes ; et
   - m représente un nombre entier compris entre 3 et 8.

Par acide carboxylique, on entend les acides carboxyliques et leurs dérivés, tels que les anhydrides d'acide, les chlorures d'acide, ou les esters.

Des procédés d'obtention de ces polyamides étoiles sont décrits dans les documents FR2743077 et FR2779730. Ces procédés conduisent à la formation de chaînes macromoléculaires étoiles, en mélange avec éventuellement des chaînes macromoléculaires linéaires. Si on utilise un comonomère de formule (III), la réaction de polymérisation est avantageusement effectuée jusqu'à l'atteinte de l'équilibre thermodynamique.

Le monomère de formule (I) peut également être mélangé à un polymère en fondu, au cours d'une opération d'extrusion.

Ainsi, selon un autre mode de réalisation de l'invention, le polyamide à structure étoile est obtenu par mélange en fondu, par exemple à l'aide d'un dispositif d'extrusion, d'un polyamide du type de ceux obtenu par polymérisation des lactames et/ou des aminoacides et d'un monomère de formule (I). De tels procédés d'obtention sont décrits dans les brevets EP0682070 et EP0672703.

Selon une caractéristique particulière de l'invention, le radical R₁ est soit un radical cycloaliphatique tel que le radical tétravalent de cyclohexanonyle, soit un radical 1,1,1 -triyle-propane, 1,2,3-triyle-propane. Comme autres radicaux R₁ convenables pour l'invention on peut citer à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Avantageusement, au moins deux radicaux R₂ différents peuvent être employés dans les monomères de formule (II).

Le radical A est, de préférence, un radical méthylénique ou polyméthylénique tel que les radicaux éthyle, propyle ou butyle ou un radical polyoxyalkylènique tel que le radical polyoxyéthylènique.

Selon un mode de réalisation particulier de l'invention, le nombre m est supérieur ou égal à 3 et avantageusement égal à 3 ou 4. La fonction réactive du composé multifonctionnel représentée par le symbole Z est une fonction capable de former une fonction amide.

De préférence, le composé de formule (I) est choisi parmi la 2,2,6,6-tétra-(β-carboxyéthyl)-cyclohexanone, l'acide trimésique, la 2,4,6-tri-(acide aminocaproique)-1,3,5-triazine et la 4-aminoéthyle-1,8-octanediamine.

Le mélange de monomères à l'origine des chaînes macromoléculaires étoiles peut comporter d'autres composés, tels que des limiteurs de chaînes ou des catalyseurs. Les composés suivants ne font pas forcément partie du mélange de monomères à l'origine de la structure étoile, mais peuvent être ajoutés à la synthèse ou après : des additifs, tels que des stabilisants lumière, des stabilisants thermiques et des lubrifiants.

Le polyamide peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La composition de l'invention peut également être une composition comprenant un polymère thermoplastique linéaire et un polymère thermoplastique étoile, H et/ou arbre tels que décrits ci-dessus. La composition de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

On peut aussi utiliser des résines polyamides non évolutives de faible masse moléculaire pouvant être obtenues de différentes façons, notamment par déséquilibre de la stœchiométrie des monomères et/ou ajout de composants bloquants (il s'agit de molécules monofonctionnelles appelés également des limiteurs de chaîne, de concentration en groupement terminaux bloquants GTB) lors du procédé de polymérisation ou polycondensation des polyamides ; ou encore par ajout de monomères ou composants bloquants en mélange, notamment en extrusion. La masse moléculaire moyenne en poids Mw de ces résines polyamides est comprise entre 6000 et 30000 g/mol, préférentiellement comprise entre 10000 et 20000 g/mol. La masse moléculaire en poids peut être mesurée selon les techniques citées dans la demande WO2011/073198 A1.

Ces polyamides présentent une concentration en groupements terminaux aminés (GTA) et/ou en groupements terminaux carboxyliques (GTC) inférieure ou égale à 20 meq/kg.

Ces résines sont dites non évolutives dans la mesure où on n'observe pas d'augmentation significative de leur masse moléculaire, ou de degré de polymérisation, lorsque celles-ci sont mises en œuvre dans le procédé de fabrication selon l'invention ; c'est-à-dire dans des conditions de températures et de pressions favorisant normalement une augmentation de masse moléculaire. Ces résines sont en ce sens différentes des polymères partiellement polymérisés ou pré-polymères classiquement utilisées. Ces résines polyamides présentent préférentiellement une concentration en groupements terminaux aminés (GTA) et/ou en groupements terminaux carboxyliques (GTC) inférieure ou égale à 20 meq/kg, préférentiellement inférieure ou égale à 15 meq/kg, plus préférentiellement inférieure ou égale à 10 meq/kg, encore plus préférentiellement inférieure ou égale 5 meq/kg, tout particulièrement égale à 0 meq/kg. Un polyamide convenable pour la présente invention peut ainsi présenter par exemple un GTA de 0 meq/kg et un GTC de 500 meq/kg. Un polyamide convenable pour la présente invention peut ainsi présenter par exemple un GTA de 400 meq/kg et un GTC de 0 meq/kg. Un polyamide présentant une concentration en groupements terminaux aminés (GTA) inférieure ou égale à 5 meq/kg, présente généralement une concentration en groupements terminaux carboxyliques (GTC) comprise entre 100 et 1 000 meq/kg. Un polyamide présentant une concentration en groupements terminaux carboxyliques (GTC) inférieure ou égale à 5 meq/kg, présente généralement une concentration en groupements terminaux aminés (GTA) comprise entre 100 et 1000 meq/kg.

Enfin, un polyamide de l'invention peut également présenter un GTA=400 meq/kg, un GTC de 0 meq/kg et une concentration en groupements terminaux bloquants GTB=100 meq/kg.

Les quantités de groupements terminaux aminés (GTA) et/ou acides (GTC) peuvent être déterminées par dosage potentiométrique après complète dissolution du polyamide, par exemple dans le trifluoroéthanol, et ajout d'une base forte en excès. Les espèces basiques sont alors titrées par une solution aqueuse d'acide fort.

De telles résines selon l'invention peuvent être fabriquées de nombreuses manières et sont bien connues en soit de l'homme de l'art.

On peut par exemple fabriquer de telles résines par ajout en polymérisation, notamment au début en cours ou en fin de la polymérisation, des monomères du polyamide, en présence en outre de composés difonctionnels et/ou monofonctionnels. Ces composés difonctionnels et/ou monofonctionnels présentent des fonctions aminés ou acides carboxyliques capables de réagir avec les monomères du polyamide et sont utilisés dans des proportions telles que la résine polyamide résultante présente préférentiellement un GTA et/ou GTC inférieur à 20 meq/kg. II est également possible de mélanger à un polyamide des composés difonctionnels et/ou monofonctionnels, notamment par extrusion, généralement une extrusion réactive, de façon à obtenir la résine polyamide utilisée selon la présente invention. On peut utiliser tout type d'acides mono- ou di-carboxylique, aliphatiques ou aromatiques ou tous types d'amines mono- ou di-amines, aliphatiques ou aromatiques. On peut notamment utiliser comme composé monofonctionnel la n- dodécylamine et la 4-amino-2,2,6,6-tétraméthylpipéridine, l'acide acétique, l'acide laurique, la benzylamine, l'acide benzoïque, l'acide acétique et l'acide propionique. On peut notamment utiliser comme composé difonctionnel, l'acide adipique, l'acide téréphtalique, l'acide isophtalique, l'acide sébacique, l'acide azélaïque, l'acide dodécanedioïque, l'acide décanedioïque, l'acide pimélique, l'acide subérique, les dimères d'acides gras, la di-(éthylcarboxy) cyclohexanone, l'hexaméthylène diamine, la méthyl-5 pentaméthylène diamine, la métaxylylène diamine, la butanediamine, l'isophorone diamine, le 1 ,4 diamino cyclohexane, la 3,3',5-triméthyl hexaméthylènediamine. On peut également utiliser un excès d'acide adipique ou un excès d'hexaméthylène diamine pour la production d'un polyamide de type 66 présentant une fluidité en fondu élevée et une concentration en groupements terminaux aminés (GTA) et/ou en groupements terminaux carboxyliques (GTC) préférentiellement inférieure à 20 meq/kg.

Il est également possible de fortement diminuer les concentrations en groupements terminaux acides ou aminés d'un polyamide en opérant une finition sous vide en fin de polymérisation de manière à éliminer l'eau afin de consommer tout ou pratiquement tous les groupements terminaux ; et ainsi garantir que la résine n'évoluera plus dans le sens de l'augmentation de la masse moléculaire, notamment sous pression ou sous vide.

On peut aussi utiliser dans la composition de la présente invention des résines polyamides bloquées non évolutives de faible masse moléculaire présentant une masse moléculaire moyenne en nombre Mn inférieure à 8000 g/mol et/ou présentant une concentration en groupements terminaux aminés (GTA) supérieure à 25 meq/kg, une concentration en groupements terminaux acides (GTC) supérieure à 25 meq/kg et une concentration en groupements terminaux bloqués (GTB) compris selon la formule 2000000/(GTA+GTC+GTB) < 8000 g/mol. Ces polyamides peuvent notamment être fabriqués en ajoutant en polymérisation du polyamide divers monomères mono ou bifonctionnels.

Le polyamide de l'invention peut également comprendre des motifs hydroxyaromatiques chimiquement liés à la chaîne du polyamide. On utilise pour ce faire un composé organique hydroxyaromatique qui est un composé comportant au moins un groupement hydroxyle aromatique et au moins une fonction capable de se lier chimiquement aux fonctions acides ou aminés du polyamide, qui une fois chimiquement lié à la chaîne polyamide, devient un motif hydroxyaromatique. Ce composé est de préférence choisi dans le groupe comprenant : l'acide 2-hydroxytéréphtalique, l'acide 5-hydroxyisophtalique, l'acide 4-hydroxyisophtalique, l'acide 2,5-dihydroxytéréphtalique, l'acide 4-hydroxyphénylacétique ou l'acide gallique, la L-Tyrosine, l'acide 4-hydroxyphénylacétique, le 3,5-diaminophénol, le 5-hydroxy m-xylylène diamine, l'amino-3 phénol, l'amino-3 méthyl-4 phénol, et l'acide hydroxy-3 amino-5 benzoïque.

La composition selon l'invention présente préférentiellement de 60 à 98 % en poids de polymère thermoplastique, préférentiellement de 80 à 95 % en poids, par rapport au poids total de la composition.

La composition peut également comprendre, selon la propriété finale souhaitée, un mélange de polyamide et un ou plusieurs autres polymères, en présence d'agent compatibilisant ou non, tel que par exemple un autre polyamide, du polyéthylène, du polystyrène, de la résine ABS, du sulfure de polyphénylène, de l'oxyde de polyphénylène, du polyacétal, du polysulfone, de la polyéthersulfone, du polyétherimide, de la polyéthercétone, une résine de polysulfone, une résine élastomère ou des mélanges de ceux-ci.

A titre de mélange de polyamide convenant à la présente invention, une composition peut par exemple comprendre :
(a) un polyamide de masse moléculaire moyenne en nombre Mn supérieure ou égale à 8 000 g/mol, et
(b) un polyamide non évolutif, c'est à dire présentant une viscosité en fondu variant au plus de 5 %, voire au plus de 2 %, de préférence au plus de 1 %, en particulier au plus de 0,5 %, pendant une durée d'au moins 30 minutes à température et pression constante sous atmosphère inerte ;
ledit polyamide (b) étant doté d'une masse moléculaire moyenne en nombre Mn comprise entre 5 000 g/mol et 8 000 g/mol.

En effet, le polyamide (b) dit « basse masse » permet avantageusement de réduire la viscosité en fondu du mélange de polyamides par rapport à celle du polyamide (a) seul. En outre, lorsque le polyamide (a) est largement majoritaire au sein du mélange, les propriétés mécaniques du polyamide (a) sont conservées, ce qui est particulièrement avantageux dans la mesure où elles sont généralement plus intéressantes que celles d'un polyamide « basse masse » pour les applications visées, à savoir la fabrication de matériaux composites.

Le mélange de polyamides (a) et (b) présente avantageusement une teneur en polyamide (a) supérieure ou égale à 65 % en poids, notamment supérieure ou égale à 80 % en poids, par rapport au poids total du mélange des polyamides (a) et (b).

### OLIGOMERE

Comme il ressort de ce qui précède, une composition thermoplastique peut comprendre au moins un plastifiant de type oligomère choisi parmi les oligomères d'ester cyclique(s) ou oligomères d'éther et leurs mélanges.

Selon l'invention, la composition thermoplastique comprend au moins un plastifiant de type oligomère choisi parmi les oligomères de polyester cyclique(s).

Au sens de l'invention, par « oligomère » on entend un composé polymère de petite taille, comprenant entre 2 et 25 monomères, c'est-à-dire dont le degré de polymérisation est compris entre 2 et 25.

Parmi les oligomères d'ester cyclique(s), peuvent être cités :
- (1) les oligomères de polyester cyclique(s) tel que le poly(butylène téréphtalate) (PBT) cyclisé ou les mélanges en contenant, tels que la résine CBT 100 commercialisée par CYCLICS CORPORATION par exemple ;
- (2) les oligomères de lactides, ou les mélanges en contenant ;
- (3) les oligomères de lactone, tel que par exemple le dimère de l'ε-caprolactone, ou les mélanges en contenant ;
- (4) les oligomères de carbonate et plus particulièrement les oligomères de carbonate d'alkylène, tels que ceux choisis parmi le carbonate d'éthylène, le carbonate de propylène, le carbonate de butylène et leurs mélanges ; et
- leurs mélanges.

Ainsi, au sens de l'invention, on entend par « oligomères d'ester cyclique(s) », non seulement les oligomères d'ester, ledit oligomère formant lui-même un cycle, ou encore les oligomères d'ester formés à partir de monomères cycliques, et les oligomères d'ester, ledit oligomère formant lui-même un cycle et formés à partir de monomères d'ester cycliques. Notamment, à titre d'oligomères formant un cycle on peut citer les oligomères (1) ci-dessus et à titre d'oligomères formés à partir de monomères cycliques, on peut citer les oligomères (2), (3) et (4) ci-dessus.

Les lactides sont des dimères cycliques comprenant deux groupements fonctionnels ester et sont obtenus par estérification de l'acide lactique. Les lactides existent sous trois stéréo-isomères. Lorsqu'ils polymérisent au-delà du degré de polymérisation égal à 2, ils polymérisent par ouverture de cycle pour créer un oligomère ou un polymère d'acide lactique selon le degré de polymérisation.

Une lactone est un monomère obtenu par estérification et cyclisation intramoléculaire d'hydroxyacide. Il existe des dimères ou des trimères cycliques, tels que le dimère de l'ε-caprolactone. Au-delà de ce degré de polymérisation, l'oligomérisation implique une ouverture de son cycle.

Selon un mode de réalisation, la composition de l'invention comprend au moins du poly(butylène téréphtalate) (PBT) cyclisé à titre d'oligomère choisi parmi les oligomères d'ester cyclique(s).

Parmi les oligomères d'éther, peuvent être cités :
- les oligomères d'éthylène glycol ;
- les oligomères de propylène glycol ; et
- leurs mélanges.

Les oligomères d'éther, encore dénommés polyoléfine éther ou polyéther, sont fabriqués à partir d'éthylène glycol ou de propylène glycol oligomérisé.

De préférence, l'oligomère, ou le mélange d'oligomères, utilisé présente une température de fusion Tf inférieure ou égale à la température de fusion Tf de la matrice polymérique thermoplastique et une viscosité inférieure à celle de la matrice thermoplastique à l'état fondu.

A ce titre, il est à noter que la viscosité à l'état fondu de l'oligomère est généralement inférieure ou égale à 5 Pa.s, de préférence inférieure ou égale à 0,5 Pa.s.

Ceci permet à l'oligomère de se mélanger correctement et de manière homogène dans la matrice thermoplastique fondue.

Les oligomères utilisés peuvent être fabriqués à partir d'un composant cyclisé ou linéaire, tel que les esters cycliques ou les éthers linéaires par exemple.

De manière avantageuse, les oligomères de l'invention présentent une structure totalement cristalline, c'est-à-dire que leurs molécules sont ordonnées selon un arrangement organisé et compact. Une telle structure cristalline présente une grande fluidité à l'état fondu, ce qui permet de diminuer plus avant la viscosité de la composition selon l'invention à l'état fondu. A titre d'exemple, la résine CBT 100 et l'oligomère de polycarbonate sont 100 % cristallins.

De préférence, l'oligomère, ou le mélange d'oligomères, est présent dans la composition selon l'invention dans une teneur allant de 1 à 10 % en poids, de préférence de 2 à 10 % en poids, de manière préférée de 3 à 8 % en poids, par rapport au poids total de la composition.

Selon un mode de réalisation, ladite matrice polymérique (a) et le(s)dit(s) oligomère(s) (b) sont mis en œuvre dans la composition selon un rapport pondéral (b)/(a) allant de 0,01 à 0,15, de préférence de 0,025 à 0,15, en particulier de 0,03 à 0,1.

Il appartient à l'homme du métier d'ajuster la teneur en agent plastifiant dans la composition. S'il n'est pas incorporé en quantité suffisante, alors il ne permet pas de diminuer correctement la viscosité du polymère thermoplastique. En revanche, au-delà d'une certaine quantité, la matrice polymérique est saturée et la dégradation de certaines propriétés peut être observée.

Lorsque la quantité en oligomère est trop importante, il peut même se produire une séparation de phase dans le polymère. Par conséquent, la limite supérieure, c'est-à-dire le seuil critique à ne pas dépasser, en ce qui concerne les proportions en oligomère, doit être inférieure au taux qui provoque cette séparation de phase. Ainsi, dans le cas particulier du poly(butylène téréphtalate) cyclisé tel que la résine CBT 100 par exemple, les proportions en oligomère dans la composition selon l'invention sont inférieures à 15 % en poids, et de manière encore préférée elles sont comprises entre 3 et 8 % en poids, ce qui est suffisant pour obtenir la réduction de viscosité escomptée et la conservation des propriétés physiques (mécaniques) de la matrice de polymère thermoplastique et de l'interface avec le matériau fibreux imprégné.

### POLYMERE PHENOLIQUE

Comme mentionné précédemment, la composition thermoplastique de l'invention comprend au moins un antiplastifiant de type polymère phénolique.

Un tel agent permet avantageusement de réduire la sensibilité à l'humidité de la matrice polymérique thermoplastique via une réduction de la cinétique de reprise en eau, et d'augmenter sensiblement sa température de transition vitreuse (Tg) sans altérer sa température de fusion (Tf).

De préférence, ce polymère phénolique est choisi parmi les résines Novolac.

Des mélanges de polymères phénoliques selon l'invention peuvent notamment être utilisés pour la réalisation de la composition selon l'invention. En particulier, la composition selon l'invention peut comprendre un ou plusieurs types de résines Novolac différentes.

Les résines Novolac sont généralement des composés de type polyhydroxy phénol, par exemple des produits de condensation de composés phénoliques avec des aldéhydes, des cétones ou leurs dérivés comme par exemple des cétals ou des hémicétals. Ces réactions de condensation sont généralement catalysées par un acide ou une base.

Les résines Novolac présentent généralement un degré de condensation allant de 2 à 15.

Les composés phénoliques peuvent être choisis seuls ou en mélange parmi le phénol, le crésol, le xylénol, le naphtol, les alkylphénols, comme le butyl-phénol, le terbutyl-phénol ou l'isooctyl-phénol, le nitrophénol, le phénylphénol, le résorcinol, le bisphénol A ; ou tout autre phénol substitué.

L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, le glycoxal et le furfural.

Comme cétone, on peut utiliser l'acétone, la méthyle éthyle cétone ou l'acétophénone.

Selon un mode de réalisation particulier de l'invention, le polymère phénolique est un produit de condensation du phénol et du formaldéhyde.

Les résines Novolac utilisées présentent avantageusement une masse moléculaire compris entre 500 et 3 000 g/mol, de préférence entre 800 et 2 000 g/mol.

Comme résine Novolac commerciale, on peut citer notamment les produits commerciaux Durez®, Vulkadur® ou Rhenosin®.

Selon un mode de réalisation de l'invention, le polymère phénolique comprend au moins des motifs de formule (I) suivante : 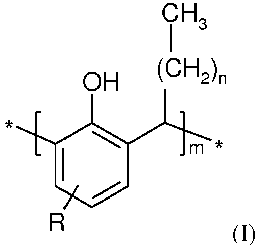 dans laquelle R représente un atome d'hydrogène ou un groupement alkyle linéaire ou ramifié comprenant de 1 à 20 atomes de carbone comprenant éventuellement des hétéroatomes, m est compris entre 6 et 15, et n est compris entre 5 et 22.

Préférentiellement le groupement alkyle linéaire ou ramifié comprend de 1 à 10 atomes de carbone. Préférentiellement les hétéroatomes sont l'oxygène ou l'azote. R est plus préférentiellement un atome d'hydrogène, un méthyle, un éthyle, un propyle, un butyle ou un octyle, m est plus préférentiellement compris entre 8 et 12, et peut prendre notamment les valeurs de 8, 9, 10, 1 1 ou 12, ou n'importe quel intervalle compris entre ces valeurs, n est plus préférentiellement compris entre 10 et 15, notamment les valeurs de 10, 11, 12, 13, 14 ou 15, ou n'importe quel intervalle compris entre ces valeurs.

Le polymère phénolique de l'invention peut également être un polymère comprenant au moins des motifs de formule (I) et également des motifs de formule (II) suivante: 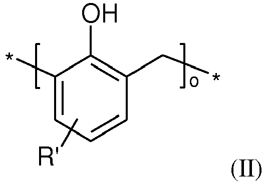 dans laquelle R' représente un atome d'hydrogène ou un groupement alkyle linéaire ou ramifié comprenant de 1 à 20 atomes de carbone comprenant éventuellement des hétéroatomes, et o est compris entre 6 et 15. R et R' peuvent être indépendant l'un de l'autre, ou équivalent. o peut prendre notamment les valeurs de 6, 7, 8, 9, 10, 1 1 , 12, 13, 14 ou 15 ou n'importe quel intervalle compris entre ces valeurs.

Ce composé peut notamment alors être un polymère statistique.

Le composé phénolique polymère de l'invention comprenant au moins des motifs représentés par la formule (I) et éventuellement des motifs représentés par la formule (II) peut être fabriqué de diverses manières. On peut notamment utiliser les procédés classiquement utilisés pour la fabrication des résines Novolac.

Le ou les polymères phénoliques, peuvent être présents dans une composition dans une teneur allant de 1 à 15 % en poids, par rapport au poids total de la composition.

Selon l'invention, le ou les polymères phénoliques sont présents dans une composition selon l'invention dans une teneur allant de 0,1 à 12 % en poids, de préférence de 2 à 12 % en poids, de manière préférée de 4 à 10 % en poids, par rapport au poids total de la composition.

Selon un mode de réalisation, ladite matrice polymérique (a) et le(s)dit(s) polymère(s) phénolique(s) (c) sont mis en œuvre dans la composition selon un rapport pondéral (c)/(a) allant de 0,01 à 0,20, de préférence de 0,02 à 0,17, en particulier de 0,04 à 0,15.

Il appartient à l'homme du métier d'ajuster la teneur en agent antiplastifiant dans la composition. S'il n'est pas incorporé en quantité suffisante, alors il ne permet pas de diminuer correctement la viscosité du polymère thermoplastique. En revanche, au-delà d'une certaine quantité, la matrice polymérique est saturée et le polymère phénolique tend à ressuer/migrer hors des pièces fabriquées avec la composition de l'invention. Dans le cadre de la fabrication d'un article composite avec une composition conforme à l'invention, l'excès de polymère phénolique peut avoir un effet négatif au niveau des interfaces fibre-matrice.

### COMPOSITION

(a) Il est décrit une composition comprenant :de 80 à 99,8 % en poids de matrice polymérique thermoplastique, en particulier de polyamide(s) ;
(b) de 0,1 à 10 % en poids d'oligomère(s) d'ester cyclique(s), d'oligomère(s) d'éther ou de leur(s) mélange(s), et en particulier de poly(butylène téréphtalate) cyclisé ; et
(c) de 0,1 à 12 % en poids de polymère(s) phénolique(s), et en particulier de résine(s) Novolac.

De préférence, elle comprend :
(a) de 80 à 98 % en poids de matrice polymérique thermoplastique, en particulier de polyamide(s) ;
(b)de 1 à 8 % en poids d'oligomère(s) d'ester cyclique(s), d'oligomère(s) d'éther ou de leur(s) mélange(s) et en particulier de poly(butylène téréphtalate) cyclisé ; et
(c)de 1 à 12 % en poids de polymère(s) phénolique(s), et en particulier de résine(s) Novolac.

En particulier, elle comprend :
(a) de 80 à 92 % en poids de matrice polymérique thermoplastique, en particulier de polyamide(s) ;
(b) de 3 à 8 % en poids d'oligomère(s) d'ester cyclique(s), d'oligomère(s) d'éther ou de leur(s) mélange(s) et en particulier de poly(butylène téréphtalate) cyclisé ; et
(c) de 5 à 12 % en poids de polymère(s) phénolique(s), et en particulier de résine(s) Novolac.

Avantageusement, la composition selon l'invention possède à l'état fondu une viscosité inférieure à 75 Pa.s et de préférence inférieure à 50 Pa.s voire inférieure ou égale à 20 Pa.s.

La composition thermoplastique à haute fluidité à l'état fondu selon l'invention peut également comprendre tous les additifs habituellement utilisés dans les compositions à base de polymère thermoplastique et notamment utilisées dans le procédé de fabrication de composites.

Ainsi, on peut citer à titre d'exemple d'additifs les stabilisants thermiques, plastifiants, antioxydants, lubrifiants, pigments, colorants, charges de renfort, agents modifiant la résistance aux chocs, agents nucléants, catalyseurs, stabilisants lumière et/ou thermique, antistatiques, matifiants, additifs d'aide au moulage et autres additifs conventionnels.

En ce qui concerne plus particulièrement les agents modifiants la résistance aux chocs, ce sont généralement des polymères d'élastomères. Les agents modificateurs de la ténacité sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les ethylène-propylène-diène momonère (EPDM) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec les polymères thermoplastiques, en particulier avec les polyamides. On peut par exemple citer les terpolymères d'éthylène, ester acrylique et glycidyl méthacrylate, les copolymères d'éthylène et de butyl ester acrylate, les copolymères d'éthylène, n- butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. On peut citer également des agents type élastomère silicone (stress relief). La proportion en poids de ces agents dans la composition totale est notamment comprise entre 0,1 et 40 %.

Des additifs pour améliorer la qualité des interfaces étoffes de renfort polymère thermoplastique peuvent également être utilisés. Ces additifs peuvent être par exemple être incorporés à la composition.

De tels additifs peuvent par exemple être des agents de couplage tels que ceux de type aminosilanes ou chlorosilanes, ou encore des agents fluidifiants ou mouillants, ou leur association.

Des charges renforçantes peuvent être incorporées à la composition thermoplastique. Ces charges peuvent être choisies parmi les charges fibreuses, tels que des fibres de verre courtes par exemple, ou des charges non fibreuses tels que le kaolin, le talc, la silice, le mica ou la wollastonite. Leur taille est généralement comprise entre 0,5 et 10 µm. Des charges sub-microniques voire nanométriques peuvent également être utilisées, seules ou en complément des autres charges.

Ces charges et additifs peuvent être ajoutés à la composition par des moyens usuels adaptés à chaque charge ou additif, tel que par exemple lors de la polymérisation ou en mélange en fondu.

Les compositions de l'invention sont généralement obtenues par mélange des différents constituants à chaud, par exemple dans une extrudeuse mono ou bivis, à une température suffisante pour maintenir la matrice thermoplastique en milieu fondu ; ou à froid dans un mélangeur mécanique notamment. Généralement, le mélange obtenu est extrudé sous forme de joncs qui sont coupés en morceaux pour former des granulés. Les constituants de la composition peuvent être ajoutés dans n'importe quel ordre. L'addition de(s) oligomère(s), du(des) polymère(s) phénolique(s) et des additifs éventuels peut être réalisée par ajout de ces composés dans la matrice thermoplastique fondue.

### PROCEDE

Comme il ressort de ce qui précède, selon un de ses aspects, la présente invention concerne un procédé de fabrication d'un article composite comprenant au moins une étape d'imprégnation d'une étoffe de renfort avec une composition selon l'invention à l'état fondu.

On entend par étoffe, une surface textile de fils ou de fibres éventuellement solidarisés par un procédé quelconque, tel que notamment collage, feutrage, tressage, tissage, tricotage. Ces étoffes sont aussi désignées comme des réseaux fibreux ou filamenteux.

Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires.

Par fibre, on entend un filament ou un ensemble de filaments coupés, craqués ou convertis.

Les fils et/ou fibres de renfort selon l'invention sont préférentiellement choisis parmi les fils et/ou les fibres de carbone, de verre, d'aramides, de polyimides, de lin, de chanvre, de sisal, de coir, de jute, de kenaf et/ou de leur mélange.

Plus préférentiellement, les étoffes de renfort sont uniquement constituées de fils et/ou fibres de renfort choisis parmi les fils et/ou les fibres de carbone, de verre, d'aramides, de polyimides, de lin, de chanvre, de sisal, de coir, de jute, de kenaf et/ou de leur mélange.

Ces étoffes ont préférentiellement un grammage, c'est-à-dire le poids au mètre carré, compris entre 100 et 1 500 g/m², de préférence, entre 100 et 1 000 g/m².

Leur structure peut être aléatoire, unidirectionelle (UD), ou multidirectionelle (2D, 2,5D, 3D ou autre).

Un article composite obtenu à l'aide du procédé selon l'invention peut comprendre plusieurs étoffes de renfort de nature différente ou non.

L'étape d'imprégnation de la composition thermoplastique de l'invention et de l'étoffe de renfort peut être réalisée de diverses manières, selon divers procédés possibles. Il est parfaitement possible de procéder à l'imprégnation d'une ou plusieurs étoffe(s) de renfort.

A titre d'exemples de procédés convenants à la présente invention on peut notamment citer les procédés de moulage, à l'image du moulage par injection, la pultrusion, comme par exemple la pultrusion-injection, le rotomoulage, le frittage, la coulée, l'extrusion comme l'extrusion soufflage ou encore les procédés de comélage.

Sont particulièrement préférés les procédés utilisant directement la résine (polymère fondu) et le renfort, comme le moulage par injection (LCM) et de pultrusion, notamment par injection.

A titre de procédé de moulage par injection, on peut par exemple citer le procédé de moulage par transfert de résine (RTM). Ce procédé comprend l'injection de la composition thermoplastique en fondu dans un moule fermé comprenant au moins une ou plusieurs étoffes de renfort. L'intérieur du moule peut être à une température de plus ou moins 50 °C par rapport à la température de fusion de la composition thermoplastique. On peut procéder ensuite au refroidissement du moule et de l'article obtenu, pour enfin récupérer ledit article. Ce procédé peut être réalisé sous pression.

Une variante de ce procédé appelé procédé C-RTM, aussi appelé injection compression peut également être utilisé dans la présente invention. Il se distingue du procédé RTM en ce que l'entrefer du moule est légèrement ouvert pendant l'injection de la composition à l'état fondu. La pièce est ensuite consolidée et mise à la cote par fermeture du moule.

Après l'imprégnation de l'étoffe de renfort par le polyamide, l'article est obtenu par solidification de la matrice. Le refroidissement peut avantageusement être effectué rapidement de façon à éviter une cristallisation importante du polyamide, notamment pour maintenir les propriétés de l'article. Le refroidissement peut notamment être effectué en moins de 5 minutes, plus préférentiellement en moins d'une minute. Le moule peut par exemple être refroidi par un circuit de fluide froid. On peut aussi éventuellement transférer l'article composite dans un moule froid, éventuellement sous pression.

Comme mentionné ci-dessus, l'article composite de l'invention peut également être réalisé par pultrusion.

Avantageusement, le procédé utilisé est un procédé de pultrusion et de préférence par injection, alors appelé procédé de pultrusion-injection.

La technique de pultrusion consiste à tirer à travers une filière chauffée un ou plusieurs fils et fibres continus de façon à l'imprégner d'une résine thermoplastique fondue pour obtenir un jonc ou article fini ou semi-fini.

Dans le procédé de pultrusion-injection, le polymère fondu est injecté au niveau de la filière chauffée à des fins d'imprégnation de l'étoffe de renfort également introduite dans cette filière.

Le procédé de consolidation à la presse à chaud (film stacking) suivi d'une étape de mise en forme comme l'estampage, avec éventuellement une étape finale de surmoulage, est également un procédé qui peut utiliser de façon avantageuse la composition revendiquée.

### ARTICLE

La présente invention concerne également un article susceptible d'être obtenu par le procédé de l'invention. L'article peut notamment être un article composite à base de polyamide comprenant une étoffe de renfort.

Les articles selon l'invention comprennent préférentiellement entre 25 et 70 % en volume, en particulier entre 45 et 67 % en volume d'étoffe de renfort par rapport au volume total. Les articles composites présentent préférentiellement pour un taux de renfort de 50 % en volume d'une contrainte à la rupture supérieure à 450 MPa et un module élastique supérieur à 20 GPa (pour un taux de vide compris typiquement entre 0 et 2 %).

Les articles de l'invention peuvent être des articles finis, ou semi-finis pouvant aussi être appelé pré-imprégnés. On peut par exemple procéder au thermoformage des articles composites sous forme de plaques pour leur donner une forme définie après refroidissement. L'invention concerne ainsi des articles composites susceptibles d'être obtenus par le procédé selon la présente invention.

Les articles de l'invention peuvent notamment être des profilés, lorsque le procédé de fabrication utilisé est un procédé de pultrusion.

Les articles de l'invention peuvent aussi être des structures de type sandwich présentant une âme insérée entre deux peaux. Les composites de l'invention peuvent être utilisés pour former les couches externes, en les associant à une âme type nid d'abeille ou type mousse. Les couches peuvent être assemblées par collage chimique ou thermique. Les structures composites selon l'invention peuvent être employées dans de nombreux domaines tels que l'aéronautique, l'automobile, l'énergie, l'industrie électrique, l'industrie des sports et loisirs. Ces structures peuvent être utilisées pour réaliser des articles de sports tels que des skis ou bien pour réaliser des surfaces diverses telles que des planchers spéciaux, des cloisons, des carrosseries de véhicules, ou des panneaux publicitaires. Dans l'aéronautique ces structures sont utilisées notamment au niveau des carénages (fuselage, aile, empennage). Dans l'automobile, elles sont utilisées par exemple au niveau des planchers, des supports tels que les blocs avant ou arrière, ou encore au niveau de pièces de structure.

Dans la description et dans les exemples suivants, sauf indication contraire, les pourcentages sont des pourcentages en poids et les plages de valeurs libellées sous la forme « entre ... et ... » incluent les bornes inférieure et supérieure précisées.

Les exemples qui suivent sont présentés à titre illustratif et non limitatif du domaine de l'invention.

### EXEMPLES

### Exemple 1 : compositions thermoplastiques

Plusieurs compositions conformes à l'invention ou hors invention à base du polyamide PA66 22FE1 commercialisé par SOLVAY sous le nom STABAMID sont préparées.

Polymère Thermoplastiques : la masse moléculaire est obtenue par mesure de chromatographie sur gel perméable (Gel Permeation Chromatographie GPC) appelé également chromatographie d'exclusion stérique (SEC).

Dans le cas des polyamides, les mesures GPC des PA6 et PA66 sont réalisées dans le dichlorométhane (solvant et éluent), après modification chimique du PA afin de le solubiliser. Un détecteur UV est utilisé car le PA modifié chimiquement possède un chromophore UV. Le calcul de la distribution de masses ainsi que des masses moyennes Mn, et Mw est effectué en équivalents polystyrène, après calibration par des étalons commerciaux. Des mesures en masses absolues sont réalisées, par détection viscosimétrique. Mn et Mw peuvent être calculées à partir de la totalité de la distribution ou après troncature des faibles masses si on ne souhaite pas prendre en compte la contribution des oligomères.

Le polyamide de composition témoin (PA66 22FE1) possède une température de fusion de 260 °C. Sa viscosité en fondu est mesurée selon le protocole détaillé précédemment à l'aide d'un rhéomètre RDA3 de Rheometrics (rhéomètre comportant un dispositif cône-plan de diamètre 25 mm) à une température de 280 °C, et est de 70 Pa.s.

Les différentes compositions préparées comprennent toutes le polyamide PA66 22FE1, et soit de la résine Novolac (Rhenosin RB commercialisé par la société Rhein Chemie) soit du poly(butylène téréphtalate) cyclisé (CBT 100 commercialisé par CYCLICS CORPORATION), soit les deux, dans les teneurs massiques indiquées dans le tableau ci-dessous. Ces compositions sont obtenues par mélange à l'état fondu des différents constituants par extrusion à l'aide d'une extrudeuse double vis PRISM 25D. Les joncs sortis de l'extrudeuse sont coulés dans un bac de refroidissement à eau et ensuite granulés.

La viscosité est alors mesurée de la même manière que pour le polyamide PA66 22FE1 seul (témoin).

Les résultats obtenus figurent dans le tableau 1 ci-dessous.

**Tableau 1**

| | **PA66 22FE1** | **Résine CBT** | **Novolac** | **Viscosité à 10 Hz** |
|---|---|---|---|---|
| | (% en poids) | (% en poids) | (% en poids) | 280 °C (Pa.s) |
| **Témoin** | 100 | 0 | 0 | 68 |
| **Composition 1** (hors invention) | 94 | 0 | 6 | 42 |
| **Composition 2** (hors invention) | 90 | 0 | 10 | 35 |
| **Composition 3** (hors invention) | 96 | 4 | 0 | 25 |
| **Composition 4** (hors invention) | 80 | 20 | 0 | 45 |
| **Composition 5 (conforme)** | 90 | 4 | 6 | 20 |
| **Composition 6 (conforme)** | 86 | 4 | 10 | 15 |
| **Composition 7 (conforme)** | 88 | 6 | 6 | 12 |
| **Composition 8 (conforme)** | 80 | 8 | 12 | 10 |

Ces résultats mettent en exergue que l'utilisation conjointe d'un plastifiant et d'un antiplastifiant selon l'invention dans un rapport pondéral antiplastifiant/plastifiant conforme à l'invention permet de réduire de façon très significative la viscosité en fondu de polymères thermoplastiques à l'image du PA66, favorisant ainsi l'imprégnation de renforts fibreux par ces compositions à l'état fondu.

La stabilité de la viscosité des compositions obtenues en fondu est évaluée au travers des valeurs de viscosité à l'état fondu mesurées à t = 0 min, t = 10 min. et t = 15 minutes à une température de 280 °C (état fondu).

Les résultats obtenus figurent dans le tableau 2 ci-dessous.

**Tableau 2**

| | **Stabilité de la Viscosité à 280 °C** | | | |
|---|---|---|---|---|
| | **Mesure à 10 Hz en fonction du temps (0 -> 15 min)** | | | |
| | **Viscosité à t₀ (Pa.s)** | **Viscosité à t_{5 min} (Pa.s)** | **Viscosité à t_{10 min} (Pa.s)** | **Viscosité à t_{15 min} (Pa.s)** |
| **Témoin** | 55 | 60 | 62 | 65 |
| **Composition 1** (hors invention) | 38 | 40 | 42 | 43 |
| **Composition 2** (hors invention) | 32 | 34 | 35 | 35 |
| **Composition 3** (hors invention) | 29 | 26 | 25 | 23 |
| **Composition 4** (hors invention) | 35 | 40 | 45 | 43 |
| **Composition 5** (conforme) | 22 | 21 | 20 | 20 |
| **Composition 6** (conforme) | 18 | 16 | 15 | 15 |
| **Composition 7** (conforme) | 18 | 17 | 12 | 12 |
| **Composition 8** (conforme) | 19 | 15 | 10 | 10 |

Ce tableau montre qu'en plus de permettre une réduction importante de la viscosité en fondu de polymères thermoplastiques à l'image du PA66, les compositions selon l'invention présentent une viscosité en fondu stable ou diminuant légèrement au cours du temps, ce qui favorise également l'imprégnation de renforts fibreux par ces compositions à l'état fondu. En revanche la viscosité en fondu des compositions hors invention a plutôt tendance à augmenter au cours du temps.

Il est à noter que l'ajout de ces composés au polyamide PA66 22FE1 n'a pas d'effet sur sa température de transition vitreuse Tg ni sur sa température de fusion Tf, lorsque la teneur cumulée en plastifiant et en antiplastifiant est inférieure à 12 %.

### Exemple 2 : Préparation d'un composite

La composition thermoplastique 5 de l'exemple précédent est utilisée dans cet exemple pour la préparation d'un composite.

L'étoffe de renfort utilisée est un tissu de fibre de verre de satin de 8 présentant un grammage de 500 g/m².

La composition thermoplastique considérée est utilisée sous forme de granulés ou de poudre (polymère faible viscosité).

Les poudres sont obtenues par broyage cryogénique, soit dans la carboglace, soit dans l'azote liquide, puis séchées (RH = 0) pendant 12 h à 110 °C sous vide.

La réalisation des pièces composites est faite au moyen d'une presse hydraulique à double plateaux contrôlés en température Schwabenthan (Polystat 300A) : plateaux chauffants (résistances chauffantes), et plateaux refroidis (circulation d'eau). Un moule métallique dotée d'une empreinte de dimensions 150 mm x 150 mm ou 200 x 300 mm est utilisé.

Pour réaliser un composite contenant 60 % en volume de fibres de verre avec le tissus de grammage 500 g/m², on introduit entre les plateaux un cadre métallique dans lequel on place une préforme constituée d'un empilement alterné comprenant 6 feuilles de tissus de verre et entre chaque de la poudre uniformément répartie, les deux couches externes étant des feuilles de tissus de verre.

La température des plateaux de la presse est préalablement montée à 275 °C (dans le cas du PA66) avant l'introduction de la préforme. A cette température, la pression est appliquée entre 1 et 25 bar et maintenue à cette valeur ; éventuellement des dégazages peuvent être rapidement effectués. L'ensemble est maintenu à la même température et pression, sans dégazage, pendant un temps suffisant pour avoir une bonne imprégnation (stabilisation de la pression et de la distance entre plateaux). Le moule est alors transféré sur le dispositif plateaux refroidis et maintenu à une pression comprise entre 1 et 5 bar pendant une durée inférieure à 5 minutes.

La durée du cycle est supérieure à 20 minutes pour des viscosités au-dessus de 250 Pa.s ; elle est réduite à 10 minutes environ pour des viscosités entre 200 et 70 Pa.s ; enfin pour des faibles viscosités (inférieures à 50 Pa.s), la durée du cycle devient inférieure à 5 minutes et la pression peut être notablement diminuée (inf. à 5 bars).

Les pièces composites ainsi obtenues ont une dimension de 150 x 150 mm ou 200 x 300 mm et une épaisseur de 2 mm environ.]

L'association plastifiant/antiplastifiant procure au polyamide une excellente mouillabilité à chaud sur tissu. Ceci permet d'obtenir un bon niveau de cohésion interfaciale entre le polymère et les fibres du renfort.

La très faible viscosité des compositions thermoplastiques selon l'invention permet ainsi une excellente consolidation (taux de vide : 0,1 %), pour un taux volumique de fibres de 60 % et un temps de cycle court (inférieur à 5 minutes). Ainsi, un cycle global de 30 minutes peut comporter 15 minutes de chauffage / 5 minutes de palier en température (T > Tf), et 10 min de refroidissement. Le taux de vide est mesuré par pesée (Norme ASTM D2734-94), et éventuellement contrôlé par observation en microscopie électronique à balayage (MEB) pour des taux faibles.

Le temps de cycle correspond à la durée totale entre la mise en température du moule et le refroidissement sous pression.

## Revendications

1. Composition thermoplastique à haute fluidité à l'état fondu, comprenant au moins :
(a) de 80 à 99,8 % en poids de matrice polymérique thermoplastique, en particulier de polyamide(s) ;
(b) de 0,1 à 10 % en poids d'oligomère(s) de polyester cyclique(s), en particulier de poly(butylène téréphtalate) cyclisé, ledit oligomère possédant un degré de polymérisation compris de 2 à 25 ; et
(c)de 0,1 à 12 % en poids de polymère(s) phénolique(s), et en particulier de résine(s) Novolac ;
lesdits composés (b) et (c) étant présents dans un rapport pondéral (c)/(b) variant de 0,25 à 6 de préférence d'environ 0,75 à 2,75.

2. Composition selon la revendication 1 dans laquelle ladite matrice est constituée de polyamide(s) choisi(s) parmi les polyamides obtenus par polycondensation d'au moins un diacide carboxylique aliphatique avec une diamine aliphatique ou cyclique, les polyamides obtenus par polycondensation d'au moins un diacide carboxylique aromatique et une diamine aliphatique ou aromatique, les polyamides obtenus par polycondensation d'au moins un aminoacide ou lactame sur lui-même, ou leurs mélanges et (co)polyamides, et de préférence ledit polyamide comprend des motifs hydroxyaromatiques chimiquement liés à la chaîne du polyamide.

3. Composition selon la revendication 2, ledit polyamide présentant une masse moléculaire moyenne en poids Mw comprise entre 10 000 et 50 000 g/mol, préférentiellement comprise entre 12 000 et 30 000 g/mol.

4. Composition selon l'une quelconque des revendications 2 à 3, ledit polyamide étant choisi parmi les PA 66, PA 6.10, PA 6.12, PA 12.12, PA 4.6, MXD 6, PA 6, PA 7, PA 9T, PA 10T, PA 11, PA 12, PA 6T/6I, PA 6T/6I/66, les copolyamides en dérivant, et leurs mélanges.

5. Composition selon l'une quelconque des revendications précédentes, ledit polymère phénolique étant un produit de condensation du phénol et du formaldéhyde, et de préférence ledit polymère phénolique comprend des motifs de formule (I) suivante : 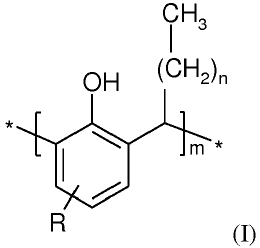 dans laquelle R représente un atome d'hydrogène ou un groupement alkyle linéaire ou ramifié comprenant de 1 à 20 atomes de carbone comprenant éventuellement des hétéroatomes, m est compris entre 6 et 15, et n est compris entre 5 et 22.

6. Procédé de fabrication d'un article composite comprenant au moins une étape d'imprégnation d'une étoffe de renfort ou d'une préforme avec une composition selon l'une quelconque des revendications 1 à 5 à l'état fondu.

7. Procédé selon la revendication précédente **caractérisé en ce qu'**il s'agit d'un procédé de pultrusion de préférence par injection directe, ou de RTM par injection en moule fermé.

8. Article composite obtenu par le procédé selon la revendication 6 ou 7.

9. Utilisation d'un oligomère (b) choisi parmi les oligomères de polyester cyclique(s) en association avec au moins un polymère phénolique (c), ledit oligomère possédant un degré de polymérisation compris de 2 à 25, à titre d'additif fluidifiant dans une matrice polymérique thermoplastique, de préférence lesdits composés (b) et (c) sont mis en présence dans un rapport pondéral (c)/(b) variant de 0,25 à 6 de préférence d'environ 0,75 à 2,75.

## Patentansprüche

1. Thermoplastische Zusammensetzung mit hoher Fließfähigkeit in schmelzflüssigem Zustand, umfassend mindestens:
(a) 80 bis 99,8 Gew.-% thermoplastische Polymermatrix, insbesondere Polyamid(e);
(b) 0,1 bis 10 Gew.-% cyclisches Polyester-Oligomer bzw. cyclische Polyester-Oligomere, insbesondere cyclisiertes Poly(butylenterephthalat), wobei das Oligomer einen Polymerisationsgrad zwischen 2 und 25 aufweist; und
(c) 1 bis 12 Gew.-% phenolisches Polymer bzw. phenolische Polymere und insbesondere NovolakHarz(e);
wobei die Verbindungen (b) und (c) in einem Gewichtsverhältnis (c)/(b) im Bereich von 0,25 bis 6 und vorzugsweise von ungefähr 0,75 bis 2,75 vorliegen.

2. Zusammensetzung nach Anspruch 1, wobei die Matrix aus Polyamid bzw. Polyamiden besteht, das bzw. die aus durch Polykondensation von mindestens einer aliphatischen Dicarbonsäure mit einem aliphatischen oder cyclischen Diamin erhaltenen Polyamiden, durch Polykondensation von mindestens einer aromatischen Dicarbonsäure und einem aliphatischen oder aromatischen Diamin erhaltenen Polyamiden, durch Polykondensation von mindestens einer Aminosäure oder einem Lactam mit sich selbst erhaltenen Polyamiden oder Mischungen davon und (Co)polyamiden ausgewählt ist bzw. sind und vorzugsweise das Polyamid hydroxyaromatische Einheiten umfasst, die chemisch an die Kette des Polyamids gebunden sind.

3. Zusammensetzung nach Anspruch 2, wobei das Polyamid eine gewichtsmittlere Molmasse Mw zwischen 10.000 und 50.000 g/mol und vorzugsweise zwischen 12.000 und 30.000 g/mol aufweist.

4. Zusammensetzung nach einem der Ansprüche 2 bis 3, wobei das Polyamid aus PA 66, PA 6.10, PA 6.12, PA 12.12, PA 4.6, MXD 6, PA 6, PA 7, PA 9T, PA 10T, PA 11, PA 12, PA 6T/6I, PA 6T/6I/66, davon abgeleiteten Copolyamiden und Mischungen davon ausgewählt ist.

5. Zusammensetzung nach einem der vorhergehenden Ansprüche, wobei es sich bei dem phenolischen Polymer um ein Kondensationsprodukt von Phenol und Formaldehyd handelt und das phenolische Polymer vorzugsweise Einheiten der folgenden Formel (I) umfasst: 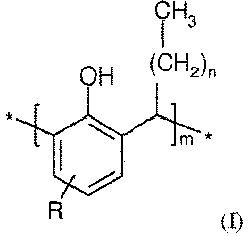 in der R für ein Wasserstoffatom oder eine lineare oder verzweigte Alkylgruppe mit 1 bis 20 Kohlenstoffatomen, die gegebenenfalls Heteroatome enthält, steht, m zwischen 6 und 15 liegt und n zwischen 5 und 22 liegt.

6. Verfahren zur Herstellung eines Verbundgegenstands, umfassend mindestens einen Schritt der Imprägnierung eines zur Verstärkung dienenden textilen Flächengebildes oder einer Vorform mit einer Zusammensetzung nach einem der Ansprüche 1 bis 5 in schmelzflüssigem Zustand.

7. Verfahren nach dem vorhergehenden Anspruch, **dadurch gekennzeichnet, dass** es sich um ein Pultrusionsverfahren, vorzugsweise durch Direkteinspritzung, oder ein RTM-Verfahren durch Einspritzung in eine geschlossene Form handelt.

8. Verbundgegenstand, erhalten durch das Verfahren nach Anspruch 6 oder 7.

9. Verwendung eines Oligomers (b), das aus cyclischen Polyester-Oligomeren ausgewählt ist, in Kombination mit mindestens einem phenolischen Polymer (c), wobei das Oligomer einen Polymerisationsgrad zwischen 2 und 25 aufweist, als flüssigmachender Zusatzstoff kin einer thermoplastischen Polymermatrix, wobei die Verbindungen (b) und (c) vorzugsweise in einem Gewichtsverhältnis (c)/(b) im Bereich von 0,25 bis 6 und vorzugsweise von ungefähr 0,75 bis 2,75 zusammengebracht werden.

## Claims

1. Thermoplastic composition having high fluidity in the molten state, comprising at least:
(a) from 80% to 99.8% by weight of thermoplastic polymer matrix, in particular of polyamide(s);
(b) from 0.1% to 10% by weight of cyclic polyester oligomer(s), in particular of cyclized poly(butylene terephthalate), the said oligomer having a degree of polymerization of from 2 to 25; and
(c) from 0.1% to 12% by weight of phenolic polymer(s), and in particular of novolac resin(s);
the said compounds (b) and (c) being present in a (c)/(b) ratio by weight varying from 0.25 to 6, preferably from approximately 0.75 to 2.75.

2. Composition according to Claim 1, in which the said matrix is composed of polyamide(s) chosen from the polyamides obtained by polycondensation of at least one aliphatic dicarboxylic acid with an aliphatic or cyclic diamine, the polyamides obtained by polycondensation of at least one aromatic dicarboxylic acid and an aliphatic or aromatic diamine, the polyamides obtained by polycondensation of at least one amino acid or lactam with itself, or their mixtures and (co)polyamides, and preferably the said polyamide comprises hydroxyaromatic units chemically bonded to the chain of the polyamide.

3. Composition according to Claim 2, the said polyamide exhibiting a weight-average molecular weight Mw of between 10 000 and 50 000 g/mol, preferentially of between 12 000 and 30 000 g/mol.

4. Composition according to either one of Claims 2 and 3, the said polyamide being chosen from PA 66, PA 6.10, PA 6.12, PA 12.12, PA 4.6, MXD 6, PA 6, PA 7, PA 9T, PA 10T, PA 11, PA 12, PA 6T/6I, PA 6T/6I/66, the copolyamides deriving therefrom, and their mixtures.

5. Composition according to any one of the preceding claims, the said phenolic polymer being a condensation product of phenol and formaldehyde, and preferably the said phenolic polymer comprises units of following formula (I): 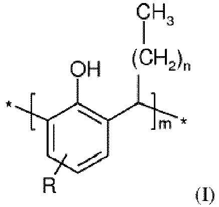 in which R represents a hydrogen atom or a linear or branched alkyl group comprising from 1 to 20 carbon atoms optionally comprising heteroatoms, m is between 6 and 15, and n is between 5 and 22.

6. Process for the manufacture of a composite article comprising at least one stage of impregnation of a reinforcing cloth or of a preform with a composition according to any one of Claims 1 to 5 in the molten state.

7. Process according to the preceding claim, **characterized in that** it is a pultrusion process, preferably by direct injection, or an RTM process by closed-mould injection.

8. Composite article obtained by the process according to Claim 6 or 7.

9. Use of an oligomer (b) chosen from cyclic polyester oligomers in combination with at least one phenolic polymer (c), the said oligomer having a degree of polymerization of from 2 to 25, as fluidizing additive in a thermoplastic polymer matrix; preferably, the said compounds (b) and (c) are brought together in a (c)/(b) ratio by weight varying from 0.25 to 6, preferably from approximately 0.75 to 2.75.
